# Europäisches Patentamt
# European Patent Office
# Office européen des brevets

(11) Publication number: **0 088 374**
**B1**

(12) **EUROPEAN PATENT SPECIFICATION**

(45) Date of publication of patent specification: **04.06.86**

(21) Application number: **83102078.9**

(22) Date of filing: **03.03.83**

(51) Int. Cl.⁴: **C 03 B 37/025, C 03 C 17/02**

(54) **Method of and device for fabricating optical-fibre preforms.**

(30) Priority: **05.03.82 IT 6725782**

(43) Date of publication of application:
**14.09.83 Bulletin 83/37**

(45) Publication of the grant of the patent:
**04.06.86 Bulletin 86/23**

(84) Designated Contracting States:
**AT BE CH DE FR GB LI NL SE**

(56) References cited:
**EP-A-0 005 963**
**DE-A-3 025 772**
**FR-A-2 275 415**
**US-A-4 165 224**
**US-A-4 280 829**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Roba, Giacomo**
**Via Allegro 63/5**
**Cogoleto (Ge) (IT)**

(74) Representative: **Riederer Freiherr von Paar zu Schönau, Anton et al**
**Freyung 615 Postfach 2664**
**D-8300 Landshut (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention concerns fabricating methods of physical carriers for telecommunications systems using light radiations and in particular it relates to a method as stated in the prior art portion of claim 1 and to a device for fabricating optical-fibre preforms as stated in the prior art portion of claim 4, such method and device being known from US—A—4 280 829.

At present Inside Chemical Vapour Deposition (ICVD) is one of the methods usually adopted to produce optical-fibre preforms. According to this method, raw materials are synthetized and deposited inside a quartz tube, which is then inserted into a furnace and raised to collapsing temperature, so as to obtain a preform without any cavity from which the optical fibre can be drawn. The synthesis reaction of raw materials, such as silica, phosphorus oxides, germanium oxides, etc, and their vitrification conditions, require working temperatures which depend on the composition of the mixture of different oxides and are generally rather high.

Mixture composition choice is then effected not only to obtain the desired refractive-index profile, but also to lower the working temperature during main process steps: i.e. deposition and collapsing. In addition, as the method requires the deposition of a considerable number (50—100) of layers, it takes quite a long time (up to 4—8 hours); hence the supporting tube undergoes numerous thermal cycles, being highly stressed. The greater the thermal shock the tube is submitted to, the greater its diameter reduction. This is due to the collapsing, generated by surface tension and facilitated by low quartz viscosity at high temperature.

The reduction in the tube internal section entails a non-controllable flow variation of the reaction gases, hence variations in the concentration of the dopants and/or of the refractive index. If a determined value of diameter reduction has been exceeded, a degeneration of the process is inevitable, with consequent big geometrical and optical irregularities which make the preform unusable.

This event can be avoided by the use of suitable raw material mixtures, which do not require high working temperatures. However, to obtain good results even at wavelengths exceeding the second window (1,3 µm), matrices with few components must be used, both to limit scattering losses and to avoid intrinsical absorption at high wavelengths.

The prior art method of US—A—4 280 829 sees to controlling the diameter by generating and maintaining a suitable pressure difference between the internal and the external tube surface by controlling the back-pressure at the output of the supporting tube. To this end, the diameter of the supporting tube is monitored in the heated zone and upon diameter variations being detected, a gas flow contributing to the back-pressure is controlled. The diameter control is carried out only upon an aberration of the critical value.

It is recognized by the applicant that one of the reasons for a diameter variation is a difference of the reactants and gas flow penetrating the supporting tube, and that such variation can be foreseen and compensated on forehand, thereby avoiding diameter fluctuations.

Therefore there are provided the method and device according to the invention that are defined in claims 1 and 4. Herein the additional gas flow used for controlling the back-pressure is also made dependent on the input gas flow to the supporting tube so that if this input gas flow becomes lower or higher, the additional gas flow becomes higher or lower, respectively, so as to keep the total through-flow generating the pressure difference on programmed values, preferably on a constant value.

The foregoing and other characteristics of the present invention will be made clearer by the following description of a preferred embodiment thereof, given by way of example and not in a limiting sense, and by the annexed drawings in which:

Fig. 1 is a schematic diagram of the apparatus of the fabrication of preforms;

Fig. 2 is a sectional view of the device denoted by GP in Fig. 1.

The method according to the present invention consists in controlling the pressure inside the tube so as to counterbalance the strength exerted by the surface tensions.

Such a control if effected by mechanical regulators which reduce the end section of the quartz tube cannot be applied for two reasons.

As such a regulator directly acts on the reactant flow, the process is perturbed. In addition, in order to obtain a system with a rather quick response to the adjusting operations, that is a system which can be applied on line, the regulator ought to have a rather low capacity. This makes it difficult to apply to a process which gives solid colloidal particles as reaction resultants. These easily obstruct the residual tube section, preventing the regular reactant flow.

According to the invention, the pressure control is effected upstream the supporting tube without any direct intervention on the reactant flow.

The wanted pressure is obtained by the choice of a suitable flow of inert gas, or of a gas of the same kind as that of the reactant carrier, in a line placed in parallel with the main line of the process. By means of a suitable device, joined to the additional line above, a pressure value is obtained at the tube end which is controllable and is fluctuating according to the tube diameter variations. The reactant flow inside the tube is ensured by keeping between input and output a pressure difference, whose value is determined by fluid dynamic system conditions. A pressure increase or decrease at the output causes an immediate pressure increase or decrease at the input by control flow meters, so as to keep the pressure difference constant at the tube ends. The diameter value, measured at the highest tube temperature, is introduced into a feedback loop supplying a signal which controls the flow of the above-mentioned inert gas.

Diameter fluctuations due to sudden flow variations are prevented by adding the flow values of all the reactants and by keeping the sum constant by an adjustment operation in the flow-meter which is part of the line known as "by-pass". This line is to supply a gas apt to maintain a laminar reactant flow.

Moreover the sum is subsequently added to tube diameter value to control the flow in the parallel line.

The individual flows of the reactant gases, of the by-pass line and of the parallel line are computer controlled. The computer effects the necessary variations in the reactant flows, depending on the required refractive index profiles, and keeps the total flow constant. Small errors are corrected by the already-mentioned feedback loops. Thus, if the tube tends to collapse, there is a diameter reduction, making the flow vary in the parallel line.

Let us now discuss how the relationship can be defined which allows the supporting tube diameter variations to be compensated for.

The relationship between the internal tube pressure $p_i$, and external tube diameter D is:

$$p_i = 2\tau\left(\frac{1}{D} + \frac{1}{\sqrt{D^2 - a^2}}\right)$$

where:

$\tau$ = is the surface tension of the quartz,

$a$ is the tube diameter in case of complete collapsing.

This relationship is not linear, therefore a control of the non linear type, very difficult to effect, would be necessary. However, for D much greater than $a$ and for small variations of D, $(\Delta D/D \ll 1)$, the system can be considered as linear. In this case the relative pressure variation entails a diameter variation according to the new relationship:

$$\left|\frac{\Delta Pi}{Pi}\right| = \frac{D^3 + \sqrt{(D^2 - a^2)^3}}{(D^2 - a^2) \cdot (D + \sqrt{D^2 - a^2})} \left|\frac{\Delta D}{D}\right|$$

which under the conditions above becomes

$$\left|\frac{\Delta Pi}{Pi}\right| \cong \left|\frac{\Delta D}{D}\right|$$

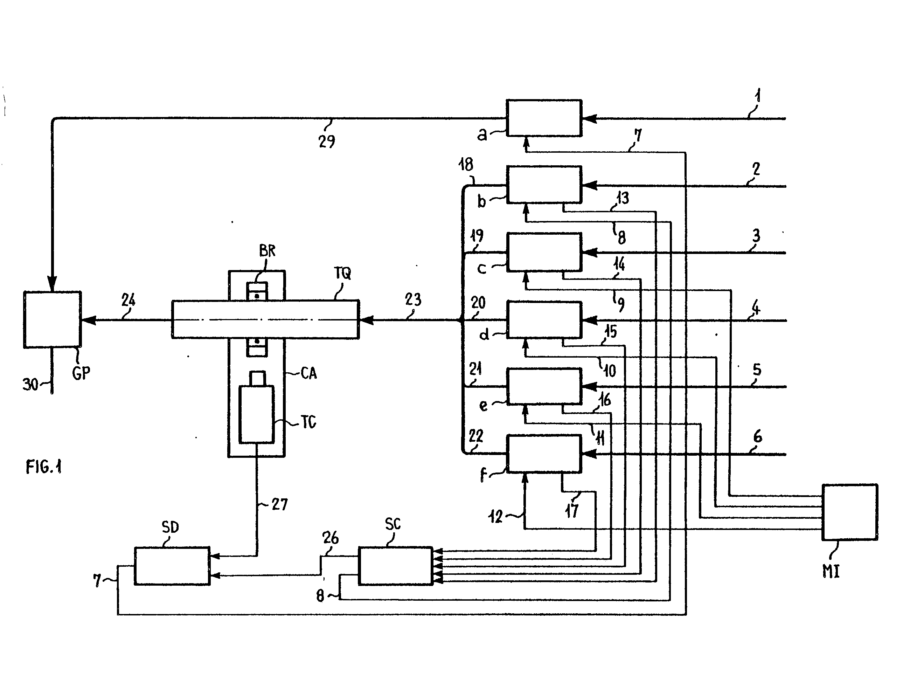

The apparatus, shown in Fig. 1, is composed of a set of devices for the mass flow control, denoted by references a, b, c, d, e, f. In particular:

— the gas of the parallel line ($O_2$, Ar) flows through a
— the gas of the by-pass line ($O_2$) flows through b
— the gas carrying the reactant $SiCl_4$ ($O_2$, Ar) flows through c
— gas carrying reactant $GeCl_4$ ($O_2$, Ar) flows through d
— gas carrying reactant $POCl_3$ flows through e
— gas carrying one of the reactants $BCl_3$, $SiF_4$, $SiFCl_3$, $CFCl_3$ flows through f.

They come from vaporizers, not shown in the Figure through conduits denoted respectively by references 1, 2, 3, 4, 5 and 6. In addition said devices are equipped with input terminals, connected respectively to wires 7, 8, 9, 10, 11 and 12, through which electrical signals can be received apt to control the flows, and, with the exception of a, with output terminals.

Said output terminals, connected respectively to wires 13, 14, 15, 16 and 17, supply electrical signals for the flow measurement.

A computer MI, based on a pre-determined program, supplies c, d, e and f with control signals so as to change during the process the mixture of deposited materials and obtain the desired refractive index profile.

At the outputs of devices b, c, d, e, f, through conduits 18, 19, 20, 21 and 22, gases are conveyed into an only conduit 23 and through it arrive at the reaction chamber, whose quartz supporting tube TQ and burner BR are shown in the Figure. Both the reactant synthesis reaction and raw material deposition occur in tube TQ. The reaction is facilitated by the high temperature generated by burner BR, which is placed over a carriage CA which can be displaced parallely with the supporting tube axis. The simultaneous tube rotation around its axis ensures a uniform deposition on the whole internal surface of the tube itself.

Residual gases as well as a quantity of raw materials which have not been deposited, are led outside via conduit 24.

To keep the flow constant through conduit 23, electrical signals relating to individual flows, present on wires 13, 14, 15, 16 and 17, are added in a circuit SC and compared with a pre-determined and constant value of the total flow. The amplified error signal, present on wire 8, controls the "by-pass" line flow by means of device b and hence the global flow through conduit 23 and supporting tube TQ.

A second circuit SD receives at a first input, connected to wire 26, a signal proportional to the sum of flows calculated by circuit SC and at a second input, connected to wire 27, a signal proportional to the diameter of supporting tube TQ. In the present example this second signal is supplied by a telecamera TC, placed on carriage CA, and pointed at the supporting tube in correspondence with the zone heated by burner BR. However, other means can be used to replace the telecamera: i.e. a profile projection can be effected by means of an optical source and the image can be detected by a stripe of photodiodes.

The circuit SD adds the two signals present at the inputs and compares them with a predetermined reference signal. The duly amplified and sign-inverted error signal arrives via wire 7 at device a and controls the gas flow on the line, consisting of conduit 29, parallel to the main line.

Both the parallel line and the main line end in a device GP, which will be better disclosed later, which carries out two tasks:

— generation of a pressure loss, so as to allow the pressure control in the supporting tube;
— separation from the residual gases of the solid particles derived from the synthesis reaction. Device GP is further equipped with an output connected through conduit 30 to an aspirator, not shown in the Figure, which allows residual gases to be removed and a constant pressure to be maintained outside the device.

If the global gas flow increases in conduit 23 or the supporting tube diameter increases in the heated zone, the flow is reduced in the parallel line and hence the pressure is reduced in device GP.

In this way, if the flow increases in conduit 23, e.g. owing to fortuitous events or to deposition requirements, the parallel line flow results equally reduced, and hence the flow at the output of device GP comes out to be constant. As a consequence there are no variations in the pressure difference between the external and internal surface of the supporting tube.

If on the contrary the supporting tube tends to collapse, e.g. owing to accidental fluctuations (temperature variations, tube thickness variations, etc.), the diameter decreases and the flow in the parallel line is duly increased, so that the flow outgoing from device GP is increased and hence the pressure difference between the internal and the external surface of the tube increases. In this way the diameter variation is compensated for.

If diameter variation cause is temporary, the correction is equally temporary, if, on the contrary, it is wanted and permanent, a new steady state is obtained, characterized by a new value of the flow in the parallel line.

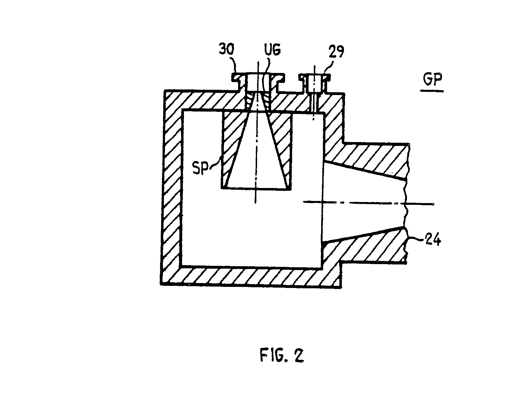

A possible embodiment of device GP is shown in a sectional view in Fig. 2.

It consists of a closed container provided with a first feeding conduit, still denoted by 24, shaped as a frustrum of a cone, to facilitate a first deposition of the solid particles at the device bottom. Inside it there is a device SP apt to separate the solid particles from the gas, consisting of a conduit with an inner profile shaped as a frustrum of a cone and with vertical axis. The gas and solid particle flow reaches a vertical speed component which increases more and more as it approaches the smaller base, owing to the progressive shrinkage of the duct. Then the collisions of the solid particles against the surface become more and more violent, till they break the colloidal suspension state which allows the transport of the solid by the gas. As a consequence of the gravity, the solid particles precipitate to the bottom, wherefrom they will afterwards be removed.

This separator ends in a nozzle UG, consisting of a duct with a cone-shaped internal profile ending with a gauged hole. Between the internal surfaces of the nozzle and of the separator no discontinuity is to be present so as to avoid perturbations of the residual gas flow.

The required pressure loss, which is a function of the working conditions under which the deposition process develops is obtained by a convenient choice of the nozzle geometric sizes.

Reference 29 denotes a union connected to parallel line and reference 30 another one connected to the suction line.

Other means can be used to separate gas from solid particles: e.g. centrifugal or electrostatical separators.

The above description has been given only by way of non limiting example. Variations and modifications could be made while remaining within the scope of the claims.

**Claims**

1. Method of fabricating optical-fibre preforms, wherein the raw materials are obtained by synthesis at high temperature from vapour phase reactants and are deposited layer after layer inside a supporting tube (TQ), which is arranged in the course of a main line (23, 24) conducting said reactants and a carrier gas, and wherein the outer diameter of said supporting tube is kept constant by compensating for the effect of surface tensions by a suitable pressure difference between the internal and external surfaces of the tube, this difference being generated by means of a flow control of an inert gas or of a gas of the same kind as that of the reactant carrier gas in a line (29) placed in parallel with the main line (23, 24) comprising the supporting tube, and joined with it downstream of the supporting tube by a device (GP) generating a back-pressure of suitable value that depends on the total through-flow, the wanted flow variations in the line (29) placed in parallel with the main line (23, 24) being made an inverse function of the variations of the external diameter of the supporting tube (TQ) in the zone where the temperature is higher, characterized in that said flow variations in the line (29) placed in parallel are made also an inverse function of variations of the total flow, composed of the reactants, of the carrier gases carrying the reactants and of inert gases, at the input (23) of the supporting tube (TQ).

2. Method as in claim 1, characterized in that the total flow at the input (23) of the supporting tube (TQ) is kept constant by controlling (in b) the flow (in 18) of the inert gas or of a gas of the same kind as that of the reactant carrier gas, on the basis of the variations of the sum (from SC) of the individual incoming flows (in 18, 19, 20, 21, 22).

3. Method as in claims 1 or 2, characterized in that the pressure difference caused at the output of said device (GP) is kept constant.

4. Apparatus for fabricating optical-fibre preforms, comprising a reaction chamber wherein a supporting tube (TQ) is to be placed for heating and deposition of optical material layers obtained

7 0 088 374 8

by synthesis at high temperature from reactants at the inside of the tube, the reaction chamber being connected to an inlet line (23) for the inlet of gas containing the reactants and to an outlet line (24) for the exhaust of residual materials, the outlet line leading to a pressure-loss device (GP) generating a back-pressure to the exhaust from the reaction chamber, the pressure-loss device also being connected to a line (29) placed in parallel with the reaction chamber for supplying the pressure-loss device with a gas flow parallel to the reaction chamber and controlled so that the back-pressure obtains a value necessary for keeping the supporting tube outer diameter constant, a control device (SD, a) for the parallel gas flow monitoring the supporting tube outer diameter, characterized in that the control device (SD, a) by mass flow controllers (b, c, d, e, f) also monitors the total flow of gas and reactants arriving at the reaction chamber, for generating an inverse function of flow variations in the reaction chamber and in the parallel line (29).

5. Apparatus as in claim 4, characterized in that in said pressure-loss device (GP) which is composed of a container receiving both the residual gases and the solid particles coming from the reaction chamber through the outlet line (24), and the flow of the line (29) placed in parallel with the reaction chamber, and from which the residual gases are sucked through a nozzle (UG) gauged in function of the wanted pressure loss, a feeding conduit connected to the reaction chamber outlet line (24) and placed in horizontal position is shaped as a frustum of a cone with the greater base placed near the container, and the solid particles are precipitated by a separator (SP), shaped as a frustum of a cone with the smaller base ending without any discontinuity in said nozzle (UG) and with the axis in a vertical position.

**Patentansprüche**

1. Verfahren zum Herstellen der Vorformen für optische Fasern, bei dem man die Rohmaterialien durch Synthese bei hoher Temperatur aus Reaktionsstoffen in der Dampfphase erhält und sie Schicht um Schicht an der Innerseite eines Trägerrohrs (TQ) niederschlägt, das im Zug einer Hauptleitung (23, 24) angeordnet ist, die die Reaktionsstoffe und ein Trägergas führt, und bei dem man den Außendurchmesser des Trägerrohrs konstant hält, indem man die Wirkung der Oberflächenspannungen durch eine geeignete zwischen der Innenfläche und der Außenfläche des Rohrs herrschende Druckdifferenz ausgleicht, die man mit Hilfe der Strömungssteuerung eines inerten Gases oder eines Gases der gleichen Art wie das Trägergas der Reaktionsstoffe in einer parallel zur Hauptleitung (23, 24), welche das Trägerrohr enthält, angeordneten Leitung (29) erzeugt, die mit der Hauptleitung (23, 24) strömungsunterhalb des Trägerrohrs durch eine Vorrichtung (GP) vereinigt ist, die einen Gegendruck geeigneten Werts erzeugt, der vom gesamten Durchfluß anhängt, wobei man die gewünschten Strömungsänderungen in der Leitung (29), die parallel zur Hauptleitung (23, 24) liegt, zu einer inversen Funktion der Änderungen des Außendurchmessers des Trägerrohrs (TQ) im Bereich, in dem die Temperatur erhöht ist, macht, dadurch gekennzeichnet, daß man die Strömungsänderungen in der parallel angeordneten Leitung (29) auch zu einer inversen Funktion von Änderungen des gesamten Stroms macht, welcher aus den Reaktionsstoffen, den die Reaktionsstoffe tragenden Trägergasen und von inerten Gasen am Eingang (23) des Trägerrohrs (TQ) zusammengesetzt ist.

2. Verfahren nach Anspruch 1, dadurch gekennzeichnet, daß man den gesamten Strom am Eingang (23) des Trägerrohrs (TQ) konstant hält, indem man den Strom (in 18) des inerten Gases oder des Gases der gleichen Art wie das die Reaktionsstoffe tragende Trägergas in Abhängigkeit von Änderungen der Summe (von SC) der einzelnen ankommenden Ströme (in 18, 19, 20, 21, 22) regelt (in b).

3. Verfahren nach Anspruch 1 oder 2, dadurch gekennzeichnet, Daß man den am Ausgang der Vorrichtung (GP) bewirkten Druckunterschied konstant hält.

4. Vorrichtung zur Herstellung der Vorformen für optische Fasern, mit einer Reaktionskammer, in der ein Trägerrohr (TQ) zur Erhitzung und zur Niederschlagung von Schichten optischen Materials, das durch Synthese bei hoher Temperatur aus Reaktionsstoffen erhalten wird, an der Rohr-Innenseite, anzuordnen ist, wobei die Reaktionskammer mit einer Eingangsleitung (23) für das Einleiten von Gas, das die Reaktionsstoffe enthält, und mit einer Auslaßleitung (24) für den Ausstoß von restlichen Materialen verbunden ist, die Auslaßleitung zu einer Druckabfallvorrichtung (GP) führt, die gegen den Austoß aus der Reaktionskammer einen Gegendruck erzeugt, und die Druckabfallvorrichtung außerdem mit einer Leitung (29) verbunden ist, die parallel zur Reaktionskammer verläuft, um die Druckabfallvorrichtung mit einem Gasstrom parallel zur Reaktionskammer zu beliefern, und so gesteuert ist, daß der Gegendruck einen Wert annimmt, der zum Konstanthalten des Außendurchmessers des Trägerrohrs notwendig ist, und eine Steuervorrichtung (SD, a) für den parallelen Gasstrom den Außendurchmesser des Trägerrohrs überwacht, dadurch gekennzeichnet, daß die Steuerungvorrichtung (SD, a) durch Massenstromregler (b, c, d, e, f) auch den Gesamtstrom des Gases und der Reaktionsstoffe, der an der Reaktionskammer eintrifft, zum Erzeugen einer inversen Funktion der Stromänderungen in der Reaktionskammer und der parallelen Leitung (29) überwacht.

5. Vorrichtung nach Anspruch 4, dadurch gekennzeichnet, daß die Druckabfallvorrichtung (GP) als Behälter aufgebaut ist, der sowohl die Restgase und Festteilchen, die aus der Reaktionskammer über die Auslaßleitung (24) kommen, als auch den Strom von der parallel zur Reaktionskammer gelegten Leitung (29) empfängt und von dem die Restgase durch eine Düse (UG) abgesaugt werden, die in Funktion vom gewünschten Druckabfall bemessen ist, und daß in der Druckabfallvorrichtung (GP) eine mit der Auslaßleitung (24) der Reaktionskammer verbundene Einspeisungsleitung, die horizontal angeordnet ist, als Kegelstumpf geformt ist, dessen größere Grundflächen an Behalter angeordnet ist, und die festen Teilchen durch einen Separator (SP) abgetrennt werden, der als Kegelstumpf geformt ist, dessen kleinere Grundfläche ohne Diskoninuität in der Düse (UG) endet und dessen Achse sich in vertikaler Stellung befindet.

## Revendications

1. Procédé pour la fabrication de préformes pour fibres optiques, où les matériaux de base sont obtenus par synthèse à température élevée des réactants en phase vapeur et sont déposés par couches successives à l'intérieur d'un tuyau de support (TQ) qui est placé le long d'une ligne principale (23, 24) qui conduit lesdits réactants et le gaz porteur, et où le diamètre estérieur dudit tuyau de support est maintenu constant en compensant les effets des tensions superficielles par une différence convenable de pression entre la paroi interne et la paroi externe du tuyau, ladite différence étant engendrée par un contrôle du flux d'un gaz inerte ou d'un gaz du même genre que le gaz porteur des réactants, dans une ligne (29) placée en parallèle avec la ligne principale (23, 24) comprenant le tuyau de support et jointe à lui en aval du tuyau de support par un dispositif (GP apte à engendrer une perte de pression de valeur appropriée qui dépend du flux total qui le traverse, les variations désirées de flux dans la ligne (29) placée en parallèle avec la ligne principale (23, 24) étant rendues des fonctions inverses des variations du diamètre externe du tuyau de support (TQ) dans la zone où la température est plus élevée, caractérisé en ce que lesdites variations de flux dans la ligne (29), placée en parallèle, sont de même une fonction inverse des variations du flux total, composé par les réactants, par les gaz porteurs des réactants et par des gaz inertes, à l'entrée (23) du tuyau de support (TQ).

2. Procédé suivant la revendication 1, caractérisé en ce que le flux à l'entrée (23) du tuyau de support (TQ) est maintenu constant en contrôlant (en b) le flux du gaz inerte (en 18) ou d'un gaz du meme genre que le gaz porteur des divers réactants, sur la base des variations de la somme (de SC) des flux individuels à l'entrée (18, 19, 20, 21, 22).

3. Procédé suivant les revendications de 1 à 2, caractérisé en ce que la différence de pression engendrée à la sortie dudit dispositif (GP) est maintenue constante.

4. Dispositif pour la fabrication de préformes pour fibres optiques, qui comprend une chambre de réaction, où un tuyau de support (TQ) doit être placé pour le chauffage et la déposition des couches de matériau optique obtenu par synthèse à température élevée des réactants à l'intérieur du tuyau, la chambre de réaction étant connectée soit à un ligne d'entrée (23) pour l'entrée des gaz qui contiennent les réactants soit à un ligne de sortie (24) pour la sortie des matériaux résiduels, la ligne de sortie communiquant avec un dispositif pour la perte de pression (GP) qui engendre une perte de pression à partir de la chambre de réaction vers la sortie, le dispositif de perte de pression étant de même connecté à une ligne (29), placée en parallèle avec la chambre de réaction pour fournir au dispositif de perte de pression un flux de gaz parallèle à la chambre de réaction, et contrôlé de manière que la perte de pression obtient une valeur nécessaire à maintenir constant le diamètre externe du tube de support, un dispositif de contrôle (SD, a) du flux de gaz parallèle en contrôlant le diamètre externe du tube de support, caractérisé en ce que le dispositif de contrôle (SD, a) à l'aide des contrôleurs de flux de masse (b, c, d, e, f) surveillent le flux total des gaz et des réactants qui arrivent dans la chambre de réaction, pour engendrer une fonction inverse des variations de flux dans la chambre de réaction et dans la ligne parallèle (29).

5. Dispositif selon la revendication 4, caractérisé en ce que le dispositif apte à engendrer une perte de pression (GP), qui se compose d'un réservoir apte à recevoir soit les gaz résiduels, soit les particules solides provenant de la chambre de réaction à travers une ligne de sortie (24), et le flux de la ligne (29) connectée en parallèle avec la chambre de réaction, et dont l'on aspire les gaz résiduels à travers une tuyère (UG) calibrée en fonction de la perte de pression désirée, une tuyère d'alimentation horizontale (24), connectée à la ligne de sortie de la chambre de réaction, a une forme tronconique avec la grande base placée en proximité du réservoir, et les particules solides sont précipitées par un séparateur (SP), ayant une forme tronconique dont la petite base se termine sans discontinuité dans ladite tuyère (UG) et dont l'axe est en position verticale.

FIG.1

0 088 374

FIG. 2